(19) Europäisches Patentamt

European Patent Office

Office européen des brevets

(11) **EP 3 233 739 B1**

(12) **FASCICULE DE BREVET EUROPEEN**

(45) Date de publication et mention de la délivrance du brevet:
**20.02.2019 Bulletin 2019/08**

(21) Numéro de dépôt: **15832808.8**

(22) Date de dépôt: **21.12.2015**

(51) Int Cl.:
***C02F 11/14*** *(2019.01)*

(86) Numéro de dépôt international:
**PCT/FR2015/053690**

(87) Numéro de publication internationale:
**WO 2016/097664 (23.06.2016 Gazette 2016/25)**

(54) **DISPOSITIF ET PROCÉDÉ POUR LE TRAITEMENT DE BOUE**

SCHLAMMBEHANDLUNGSVORRICHTUNG UND -VERFAHREN

SLUDGE TREATMENT DEVICE AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1462990**

(43) Date de publication de la demande:
**25.10.2017 Bulletin 2017/43**

(73) Titulaire: **Institut National de Recherche en Sciences et Technologies pour l'Environnement et l'Agriculture (IRSTEA) 92160 Antony (FR)**

(72) Inventeurs:
• **BAUDEZ, Jean-Christophe 03140 Monestier (FR)**
• **DANJOUX, Fabrice 36000 Chateauroux (FR)**
• **DIEUDE-FAUVEL, Emilie 03500 Saint Pourçain sur Sioule (FR)**
• **MICLET, Denis 03150 Varennes sur Allier (FR)**

(74) Mandataire: **Cabinet Plasseraud 66, rue de la Chaussée d'Antin 75440 Paris Cedex 09 (FR)**

(56) Documents cités:
DE-A1- 19 742 977     FR-A1- 2 921 355
FR-A1- 2 940 800     GB-A- 2 454 507
US-A- 5 186 840

EP 3 233 739 B1

**Description**

La présente invention se rapporte à un dispositif et à un procédé pour le traitement de boue avec un additif pulvérulent, tel que notamment de la chaux, au sein d'une extrudeuse bivis corotative présentant un rapport longueur/diamètre inférieur à 20 et comprenant un moyen d'asservissement permettant de réguler le débit d'alimentation en additif pulvérulent en fonction du débit d'alimentation en boue. Le dispositif et le procédé de la présente invention s'appliquent particulièrement aux boues d'épuration après déshydratation de celles-ci.

**Etat de la technique**

Il est connu de traiter les boues d'épuration par un additif pulvérulent, tel que notamment de la chaux. Cette opération, connue sous le nom de chaulage lorsque l'additif pulvérulent est de la chaux, permet une hygiénisation du matériau, une réduction des odeurs, une amélioration des possibilités de manutention, une neutralisation des éléments traces métalliques et un renforcement de la valeur agronomique.

Concrètement, la chaux vive réagit avec l'eau contenue dans la boue, ce qui a pour effet, d'une part d'augmenter la température car la réaction est exothermique, et d'autre part de diminuer la teneur en eau par transformation de la chaux vive en chaux éteinte.

Selon les normes sanitaires en vigueur, une boue est hygiénisée lorsque son pH reste supérieur à 12 pendant toute la durée du stockage et que la température de réaction a été supérieure à 55°C pendant 75 minutes ou tout autre couple temps/température équivalent (tel que 58°C pendant 5 minutes). Dans les procédés connus, le mélange de chaux et de boue s'effectue avec des outils relativement rustiques, soit à l'aide de mono-vis, soit à l'aide de mélangeurs spécifiques à pales ou socs de charrue et le résultat final est souvent grossier, avec un mélange fortement hétérogène. Cette hétérogénéité du mélange implique une hétérogénéité de l'action de la chaux sur les organismes pathogènes : à faibles doses, le pH n'est pas uniformément égal à 12 et des reprises de fermentation sont souvent observées. Aussi, pour respecter la législation, le surdosage est fréquent.

Exprimés en dose de chaux éteinte, qui représente environ 1.3 fois la dose de chaux vive, les minima actuellement requis sont d'environ 30%. Cependant, en pratique, pour assurer un stockage de longue durée et éviter les reprises de fermentation, ces concentrations atteignent très fréquemment 50%, voire 60% dans certains cas. Ces surdosages entrainent une forte augmentation des coûts de fonctionnement des stations d'épuration qui se répercutent de facto sur les factures d'eau des abonnés.

La Demanderesse a décrit, dans le brevet français FR 2 940 800, un procédé de traitement de boue dans une extrudeuse bivis corotative. Le dispositif utilisé dans ce procédé n'était toutefois pas adapté à une utilisation dans une station d'épuration. Il est en effet souhaitable que le dispositif aient des dimensions réduites et qu'il soit mobile afin de pouvoir répondre aux besoins ponctuels de petites installations, comme des stations d'épuration rurales.

Les présents inventeurs ont trouvé qu'une extrudeuse bivis corotative présentant un rapport longueur/diamètre inférieur à 20 permet de garantir un mélange d'une grande qualité tout en ayant des dimensions réduites. De plus, le dispositif mis au point par les présents inventeurs permet de limiter la quantité d'additif pulvérulent utilisé pour traiter la boue grâce au mode d'introduction dudit additif pulvérulent dans le dispositif et au contrôle de son débit en fonction du débit et de la qualité de la boue à traiter.

**Résumé de l'invention**

L'invention a pour objet un dispositif pour le traitement de boue avec un additif pulvérulent, ledit dispositif comprenant :

- un fourreau renfermant deux vis corotatives, lesdites vis dudit fourreau étant constituées de deux ou trois zones successives : la première zone assurant le mélange de la boue et de l'additif pulvérulent ; la deuxième zone située en aval de la première zone assurant le transport du mélange de boue et d'additif pulvérulent ; l'éventuelle troisième zone, située en amont de la première zone, assurant le transport de la boue depuis l'entrée d'alimentation en boue jusqu'à la première zone ;
- une entrée d'alimentation en boue débouchant en amont de la première zone ou de l'éventuelle troisième zone ;
- une entrée d'alimentation en additif pulvérulent débouchant au niveau de la première zone ou de l'éventuelle troisième zone ;
- une sortie du mélange de boue et d'additif pulvérulent en aval de la deuxième zone ;
- un moyen d'asservissement permettant de réguler le débit d'alimentation en additif pulvérulent en fonction du débit d'alimentation en boue ;

ledit dispositif présentant un rapport longueur/diamètre inférieur à 20, de préférence inférieur à 14, plus préférentiellement inférieur à 10.

L'invention a également pour objet un procédé de traitement de boue par extrusion, pouvant avantageusement être mis en oeuvre avec le dispositif selon l'invention, ledit procédé comprenant les étapes suivantes :

- introduction de boue dans une extrudeuse bivis corotative ;
- introduction d'un additif pulvérulent dans l'extrudeuse en aval de l'entrée de la boue ;
- mélange de la boue et de l'additif pulvérulent dans l'extrudeuse ;

- récupération du mélange de boue et d'additif pulvérulent en sortie de l'extrudeuse ;

dans lequel le débit d'alimentation en additif pulvérulent est régulé en fonction du débit d'alimentation en boue et dans lequel le temps de séjour de la boue dans l'extrudeuse est inférieur à 1 minute, en particulier inférieur à 45 secondes, plus particulièrement inférieur à 30 secondes.

## Figures

La figure 1 est une représentation schématique du dispositif selon l'invention.

La figure 2 est une représentation des doubles vis corotatives et des différentes zones de transport et de mélange.

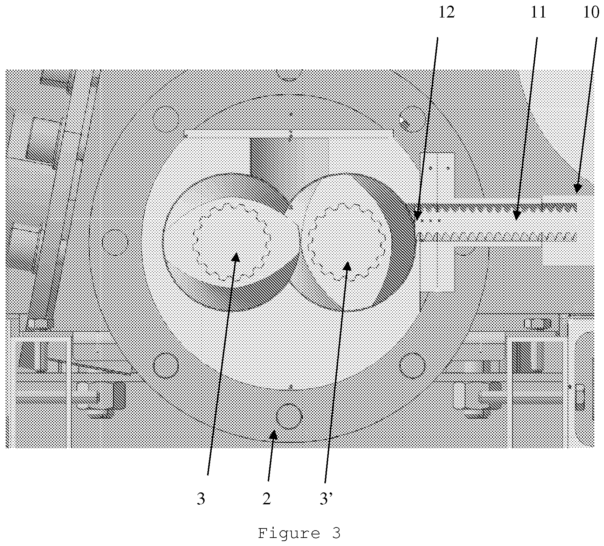

La figure 3 est une représentation schématique du positionnement du doseur volumétrique par rapport aux double vis du dispositif selon l'invention.

La figure 4 représente un graphique en trois dimensions du niveau de gris de chaque pixel d'une image numérisée d'un échantillon de boue traitée par de la chaux avec le dispositif selon l'invention.

## Dispositif

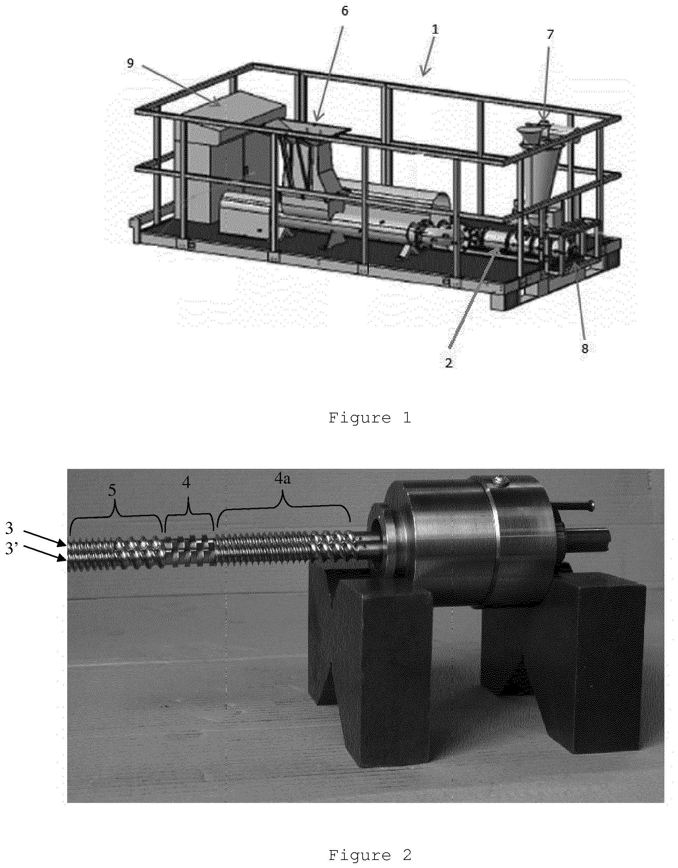

Comme représenté aux figures 1 et 2, le dispositif (1) de la présente invention comprend un fourreau (2) à double vis corotatives.

Les vis (3, 3') dudit fourreau (2) sont des vis corotatives totalement interpénétrées.

Les vis (3, 3') du dispositif selon l'invention présentent chacune un rapport longueur/diamètre inférieur à 20, de préférence inférieur à 14, plus préférentiellement inférieur à 10, la longueur correspondant à la longueur totale de la vis, exprimée en mm, et le diamètre correspondant au diamètre nominal de la vis, exprimé en mm. Ce rapport longueur/diamètre spécifique permet en effet d'obtenir un mélange de boue et d'additif pulvérulent homogène tout en optimisant le dimensionnement du dispositif.

Lesdites vis sont constituées de deux ou trois zones successives. Ainsi, chaque zone comprend deux segments de vis (3, 3'). Avantageusement, les deux ou trois zones peuvent être assemblées et démontées facilement. Cela permet en effet de limiter les coûts d'entretien lors du renouvellement des pièces clés de l'organe de mélange. Ainsi, chaque zone peut être constituée d'un ou plusieurs modules qui sont emboités sur un arbre, par exemple un arbre muni de cannelures qui permettent avantageusement de solidariser les modules à l'arbre.

La première zone (4) assure le mélange de la boue et de l'additif pulvérulent et le transport dudit mélange jusqu'à la deuxième zone (5). La deuxième zone (5) assure le transport du mélange de boue et d'additif pulvérulent jusqu'à la sortie du fourreau.

Le dispositif de l'invention peut éventuellement comprendre une troisième zone (4a), située en amont de la première zone. Ladite troisième zone (4a) permettant de transporter la boue depuis l'entrée d'alimentation en boue (6) jusqu'à la première zone (4).

La fonction de la zone, c'est-à-dire le transport et/ou le mélange de matière, est déterminée par la géométrie des segments de vis (3, 3') de chaque zone. En effet, une zone dans laquelle les filets des deux vis sont dans le sens direct, c'est-à-dire que le sens d'avancement des filets est le même que le sens de rotation des vis, permet de transporter le matériau. Le pas du filet détermine la vitesse de transport : plus le pas est grand, plus la vitesse de transport est grande. Une zone dans laquelle les filets sont dans le sens indirect, c'est-à-dire que le sens d'avancement des filets est l'inverse du sens de rotation des vis, permet de malaxer le matériau. Dans une telle zone, on constate une accumulation de matière avec des recirculations tridimensionnelles permettant un mélange très efficace.

Ainsi, les segments de vis (3, 3') de la deuxième zone (5) et de la troisième zone éventuelle (4a) du dispositif (1) selon l'invention ont des filets dans le sens direct alors que les segments de vis (3, 3') de la première zone (4) ont des filets dans le sens indirect.

Selon un mode de réalisation particulier, la première zone (4) comprend deux modules, chaque module comprenant 4 bilobes, chaque bilobe étant décalé de -30° par rapport au bilobe qui le précède.

Selon un mode de réalisation particulier, la deuxième zone (5) comprend deux modules et éventuellement une filière. Le premier module peut notamment présenter un pas rapide afin d'éviter l'accumulation de matière après la zone de mélange. Le deuxième module peut notamment présenter un pas lent afin de ralentir la matière avant la sortie du dispositif et atteindre ainsi un taux de remplissage de l'extrudeuse maximal. Le pas rapide et le pas lent peuvent notamment être tels que définis ci-dessus. La filière peut notamment permettre de mettre en forme le matériau sortant du dispositif selon l'invention.

Selon un mode de réalisation particulier, la troisième zone éventuelle (4a) peut comprendre un, deux ou trois modules. Les modules peuvent notamment présenter un pas rapide afin d'éviter l'accumulation de matière dans le dispositif ou un pas lent. Selon un mode de réalisation particulier, le pas rapide peut notamment être un pas compris entre 100 et 200 mm, en particulier entre 125 et 175 mm, plus particulièrement entre 140 et 160 mm. Selon un mode de réalisation particulier, le pas lent peut notamment être un pas compris entre 10 et 70 mm, en particulier entre 20 et 60 mm, plus particulièrement entre 30 et 50 mm.

Le dispositif (1) selon l'invention comprend également une entrée d'alimentation en boue (6) débouchant en amont de la première zone (4) ou de l'éventuelle troisième zone (4a) ainsi qu'une entrée d'alimentation en additif pulvérulent (7) débouchant au niveau de la première zone (4) ou de l'éventuelle troisième zone (4a). Le mélange de boue et d'additif pulvérulent est évacué du dispositif (1) par une sortie (8) située en aval de la deuxième zone (5).

Selon un mode de réalisation préféré, l'entrée d'alimentation en boue (6) peut comprendre un dispositif d'alimentation en boue. Ledit dispositif d'alimentation en boue a pour fonction de défloculer la boue et d'assurer un débit constant dans le fourreau (2). En effet, pour optimiser la déshydratation mécanique, des floculants sont ajoutés à la boue avant le chaulage. Ils confèrent à la boue une structure grumeleuse et relativement collante. Le dispositif d'alimentation en boue a pour rôle de briser ces grumeaux pour obtenir une structure plus fine. Cela facilite en effet la dispersion de l'additif pulvérulent dans la boue et augmente la surface d'échange. Le dispositif d'alimentation en boue comprend, par exemple, une pompe gaveuse ou un fourreau renfermant une mono-vis. Cette disposition a le double avantage de réguler le débit de boue entrant dans le dispositif et de défloculer la boue.

Selon un mode de réalisation particulier, le dispositif d'alimentation en boue comprend une pompe gaveuse. Selon un autre mode de réalisation particulier le dispositif d'alimentation en boue comprend un fourreau renfermant une mono-vis.

Selon un mode de réalisation particulier, l'entrée d'alimentation en additif pulvérulent (7) débouche au niveau de la première zone (4), plus particulièrement, l'entrée d'alimentation en additif pulvérulent (7) est située à l'extrémité de la première zone la plus éloignée de la sortie.

Selon un autre mode de réalisation, l'entrée d'alimentation en additif pulvérulent (7) débouche au niveau de l'éventuelle troisième zone (4a). Dans ce cas, l'entrée d'alimentation en additif pulvérulent (7) est éloignée de la première zone (4), notamment afin d'éviter la formation d'un bouchon. Par exemple, l'entrée d'alimentation en additif pulvérulent (7) est située entre ½ et ¾ de la longueur de la première zone (4a) dans le sens du transport.

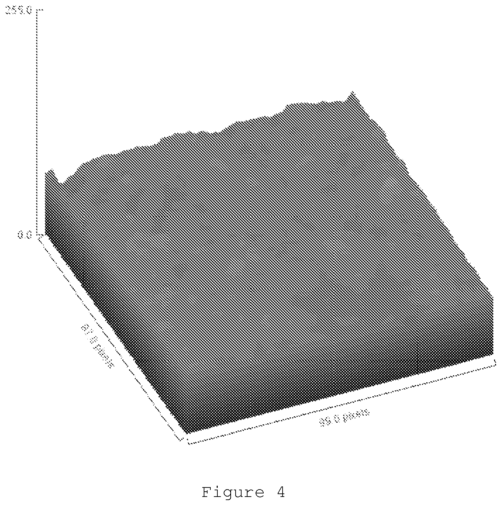

Selon un mode de réalisation préféré, ladite entrée d'alimentation en additif pulvérulent (7) comprend un doseur volumétrique, notamment un doseur volumétrique (10) à double vis (11, 11') corotatives. Les axes de rotation des doubles vis (11, 11') corotatives du doseur volumétrique (10) peuvent notamment être perpendiculaires aux axes de rotation des doubles vis (3, 3') corotatives du dispositif (1) de l'invention. De préférence, les extrémités (12, 12') des doubles vis (11, 11') corotatives du doseur volumétrique (10) affleurent les doubles vis (3, 3') corotatives du dispositif (1) de l'invention comme illustré à la Figure 4. Plus particulièrement, les extrémités (12, 12') des doubles vis (11, 11') corotatives du doseur volumétrique (10) sont situées à moins de 0,5 cm, de préférence à moins de 0,4 cm, plus préférentiellement à moins de 0,3 cm des doubles vis (3, 3') corotatives du dispositif (1) de l'invention. En effet, si la distance entre lesdites extrémités et lesdites double vis est supérieure à 0,5 cm, un bouchon peut se former dans le fourreau ce qui bloque le doseur volumétrique (10).

Selon un autre mode de réalisation, ladite entrée d'alimentation en additif pulvérulent (7) comprend une vis d'Archimède. Ce mode d'introduction est toutefois moins efficace que le doseur volumétrique (10) qui permet d'obtenir une excellente homogénéité et une régularité du dosage de l'additif pulvérulent.

Selon un mode de réalisation particulier, la vis d'Archimède assurant l'alimentation en additif pulvérulent présente un pas compris entre 10 et 50 mm, en particulier entre 20 et 40 mm, plus particulièrement entre 25 et 35 mm.

Le dispositif selon l'invention comprend également un moyen d'asservissement (9) permettant de réguler le débit d'alimentation en additif pulvérulent en fonction du débit d'alimentation en boue et de la quantité d'additif pulvérulent que l'on souhaite incorporer dans la boue. Ainsi, le moyen d'asservissement (9) peut notamment comprendre un moyen permettant de déterminer le débit à l'entrée d'alimentation en boue (6), un moyen pour contrôler la vitesse de rotation des vis (3, 3') du fourreau (2) ainsi qu'un moyen permettant de contrôler le débit à l'entrée d'alimentation en additif pulvérulent (7). Par exemple, un capteur de couple, peut être fixé sur l'arbre de la monovis du dispositif d'alimentation en boue (6). La mesure du couple associée au pas de ladite monovis permet de calculer le débit d'alimentation en boue à l'entrée du dispositif ainsi que la vitesse de rotation des doubles vis (3, 3') corotatives du dispositif (1) et la vitesse de rotation de la vis d'Archimède ou des doubles vis (11, 11') du doseur volumétrique (10) alimentant le dispositif en additif pulvérulent.

Le fourreau (2) et les deux vis (3, 3') forment un dispositif de mélange assimilable à une extrudeuse bivis corotative telle qu'on en rencontre dans le domaine du traitement des matières plastiques. Des différences notables sont toutefois la géométrie de la double vis (succession des différentes zones), l'absence de chauffage du fourreau (qui n'est pas nécessaire dans le cas des boues) et la présence d'une entrée d'alimentation en additif pulvérulent tel que de la chaux.

## Procédé

Le procédé objet de l'invention est un procédé de traitement de boue avec un additif pulvérulent par extrusion.

Le procédé selon l'invention est mis en oeuvre en introduisant de la boue dans une extrudeuse bivis corotative puis en introduisant un additif pulvérulent dans l'extrudeuse en aval de l'entrée de la boue. Le débit d'alimentation en additif pulvérulent est régulé en fonction du débit d'alimentation en boue. La boue et l'additif pulvérulent sont ensuite mélangés et ledit mélange est récupéré en sortie de l'extrudeuse. Le temps de séjour de la boue dans l'extrudeuse est inférieur à 1 minute, en particulier inférieur à 45 secondes, plus particulièrement inférieur à 30 secondes. Le temps de séjour de la boue dans l'extrudeuse peut notamment être supérieur à 7 secondes, en particulier supérieur à 15 secondes, plus particulièrement supérieur à 22 secondes.

Le procédé selon l'invention peut notamment être mis en oeuvre avec le dispositif (1) de l'invention décrit ci-dessus. Toutes les caractéristiques du dispositif (1) de l'invention s'appliquent donc au procédé selon l'invention.

De préférence, la boue est défloculée avant d'être introduite dans l'extrudeuse. La défloculation peut notamment être réalisée avec une mono-vis ou une pompe gaveuse comme décrit ci-dessus. Avantageusement, la mono-vis ou la pompe gaveuse de l'étape de défloculation transporte directement la boue vers l'entrée d'alimentation en boue (6) de l'extrudeuse (1). Cela permet notamment de réguler le débit de boue entrant dans le procédé en fonction de la vitesse de rotation et du pas de la mono-vis utilisée pour la défloculation.

La boue entrant dans le procédé selon l'invention peut notamment présenter une teneur en matières sèches comprise entre 15 et 30%, en particulier entre 20 et 25% en poids par rapport au poids de la boue.

L'additif pulvérulent est introduit dans l'extrudeuse en aval de l'entrée d'alimentation en boue (6). Selon un mode de réalisation préféré, l'entrée d'alimentation en additif pulvérulent (7) se fait lors de l'étape de mélange. Ce mode de réalisation est utilisé lorsque le dispositif (1) de l'invention comprend deux zones.

Selon un autre mode de réalisation, l'entrée d'alimentation en additif pulvérulent (7) se fait avant l'étape de mélange. Ce mode de réalisation est utilisé lorsque le dispositif (1) de l'invention comprend trois zones.

L'additif pulvérulent entrant dans le procédé selon l'invention peut notamment être de la chaux ou de la boue sèche.

Selon un mode de réalisation préféré, l'additif pulvérulent est de la chaux. Ce mode de réalisation permet de réaliser le chaulage de la boue afin de l'hygiéniser. La chaux peut notamment être de la chaux vive et contient majoritairement de l'oxyde de calcium (CaO). Lorsque la chaux vive entre en contact avec l'eau contenue dans la boue, une réaction exothermique conduit à la formation de chaux éteinte, c'est-à-dire d'hydroxyde de calcium (Ca(OH)$_2$). La chaux utilisée peut notamment présenter une granulométrie comprise entre 10 et 200 micromètres.

Selon un mode de réalisation particulier, le rapport entre la masse de chaux et la masse totale de chaux et de boue introduite dans le fourreau est inférieur à 35%, en particulier inférieur à 30%, plus particulièrement inférieur à 25%, de façon plus particulière inférieur à 20%. Un tel dosage est suffisant pour obtenir une boue traitée respectant les préconisations sanitaires car la qualité de mélange est nettement supérieure aux procédés couramment mis en oeuvre.

Selon un mode de réalisation particulier, l'additif pulvérulent est de la boue séchée. Ce mode de réalisation permet d'augmenter la siccité de la boue afin de la rendre moins collante et plus facile à mettre en oeuvre.

Selon un mode de réalisation particulier, le rapport entre la masse de boue sèche et la masse totale de boue sèche et de boue introduite dans le fourreau est compris entre 20% et 60%, en particulier entre 25% et 50%.

Selon un mode de réalisation particulier, le débit de boue traitée avec le procédé de l'invention est supérieur à 500 kg/heure, en particulier supérieur à 750 kg/heure, plus particulièrement supérieur à 900 kg/heure.

Selon un mode de réalisation particulier, le débit de chaux est compris entre 15 et 150 kg/h, en particulier entre 30 et 125 kg/h, plus particulièrement entre 60 et 100 kg/h.

Le degré d'homogénéité du mélange obtenu en sortie (8) de l'extrudeuse peut être relié à la planéité de la surface topographique des niveaux de gris mesurée sur une image numérisée du mélange tel que décrit dans le test de niveau de gris ci-après. Le procédé selon l'invention peut notamment permettre d'atteindre une variance du niveau de gris de la surface topographique inférieure à 20%, en particulier inférieure à 15%, plus particulièrement inférieure à 10%.

L'invention va être décrite plus en détails à l'aide des figures et des exemples suivants qui sont donnés à titre purement illustratif.

## EXEMPLES

### Méthodes de mesure

Le degré d'homogénéité du mélange est mesuré en analysant une image numérisée d'un échantillon de boue traitée selon l'invention avec le logiciel ImageJ en libre-accès sur internet. Le logiciel permet de mesurer le niveau de gris de chaque pixel de l'image numérisée et de calculer la variance du niveau de gris pour l'échantillon en appliquant la formule :

$$V(X) = \frac{1}{n} \sum_{i=1}^{n} (x_i - m)^2.$$

où

V(X) est la variance ;
n est le nombre de pixels ;
xi représente la valeur du niveau de gris de chaque pixel i;
m représente la moyenne des valeurs $x_i$ avec i nom-

bre entier allant de 1 à n.

**Exemple 1** :

La boue est traitée avec de la chaux dans un dispositif (1) comprenant un fourreau (2) renfermant deux vis corotatives (3, 3') ayant chacune une longueur de 0,75 m et un diamètre nominal de 80 mm. Le rapport L/D du dispositif est de 9,375.

Chaque vis comprend une première zone (4) de mélange, une deuxième zone (5) de transport située en aval de la première zone et une troisième zone (4a) située en amont de la première zone.

La première zone (4) comprend deux modules successifs, chaque module comprenant 4 bilobes, chaque bilobe étant décalé du bilobe précédent de -30°.

La deuxième zone (5) comprend deux modules successifs, le premier module ayant un pas de 150 mm et le deuxième module ayant un pas de 40 mm.

La troisième zone (4a) comprend un module ayant un pas de 40 mm.

Le dispositif est alimenté en boue avec un débit de 650 kg/heure. La boue entrant dans le dispositif (1) présente un taux de matière sèche de 22% et est acheminée par un dispositif d'alimentation comprenant une pompe gaveuse à rotor excentré monobloc 0.8-2 m$^3$/h (modèle 25GVA6 de chez PCM) .

Le dispositif est alimenté en chaux avec un débit de 43 kg/heure. La chaux entrant dans le dispositif (1) est acheminée par un doseur volumétrique (10) à doubles vis (11, 11') corotatives. Les doubles vis (11, 11') ont une longueur de 1300 mm, un diamètre nominal de 78,5 mm et un pas de 75 mm. La chaux entre dans le dispositif au niveau de la troisième zone (4a). Les axes de rotation des doubles vis (11, 11') corotatives du doseur volumétrique (10) sont perpendiculaires aux axes de rotation des deux vis (3, 3') corotatives du dispositif (1) de l'invention. Les extrémités (12, 12') des doubles vis (11, 11') corotatives du doseur volumétrique (10) sont situées à 0,2 cm des doubles vis (3, 3') corotatives du dispositif (1) de l'invention.

Le mélange de boue et de chaux est récupéré en sortie (8) du dispositif. La chaux répartie au sein de la boue réagit avec l'eau contenue dans la boue ce qui entraine une montée en température et une destruction des microorganismes.

La figure 4 montre que le mélange de boue et de chaux obtenu en sortie de dispositif (1) est homogène. En effet, l'image numérisée d'un échantillon de boue traitée par de la chaux tel que décrit ci-dessus présente une surface topographique des niveaux de gris relativement plane.

**Revendications**

**1.** Dispositif (1) pour le traitement de boue avec un additif pulvérulent, ledit dispositif comprenant :

- un fourreau (2) renfermant deux vis (3, 3') corotatives, lesdites vis dudit fourreau étant constituées de deux zones (4, 5) ou trois zones (4a, 4, 5) successives : la première zone (4) assurant le mélange de la boue et de l'additif pulvérulent ; la deuxième zone (5) assurant le transport du mélange de boue et d'additif pulvérulent ; la troisième zone (4a) située en amont de la première zone (4), assurant le transport de la boue depuis l'entrée d'alimentation en boue (6) jusqu'à la première zone (4) ; où les segments de vis (3, 3') de la deuxième zone (5) et de la troisième zone éventuelle (4a) du dispositif (1) ont des filets dans le sens direct, c'est-à-dire que le sens d'avancement des filets est le même que le sens de rotation des vis, alors que les segments de vis (3, 3') de la première zone (4) ont des filets dans le sens indirect, c'est-à-dire que le sens d'avancement des filets est l'inverse du sens de rotation des vis ;
- une entrée d'alimentation en boue (6) débouchant en amont de la première zone (4) ou de l'éventuelle troisième zone (4a) ;
- une entrée d'alimentation en additif pulvérulent (7) débouchant au niveau de la première zone (4) ou de l'éventuelle troisième zone (4a) ;
- une sortie (8) du mélange de boue et d'additif pulvérulent en aval de la deuxième zone (5) ;
- un moyen d'asservissement (9) permettant de réguler le débit d'alimentation en additif pulvérulent en fonction du débit d'alimentation en boue ;

les vis (3, 3') dudit dispositif (1) présentant chacune un rapport longueur/diamètre inférieur à 20, de préférence inférieur à 14, plus préférentiellement inférieur à 10.

**2.** Dispositif (1) selon la revendication 1, **caractérisé en ce que** l'entrée d'alimentation en additif pulvérulent (7) comprend un doseur volumétrique (10).

**3.** Dispositif (1) selon la revendication 2, **caractérisé en ce que** le doseur volumétrique (10) est un doseur volumétrique à double vis (11, 11') corotatives.

**4.** Dispositif (1) selon la revendication 3, **caractérisé en ce que** les extrémités (12, 12') des doubles vis (11, 11') corotatives du doseur volumétrique (10) sont situées à moins de 0,5 cm, de préférence à moins de 0,4 cm, plus préférentiellement à moins de 0,3 cm des doubles vis (3, 3') corotatives du dispositif (1).

**5.** Procédé de traitement de boue par extrusion **caractérisé en ce qu'**il est réalisé dans le dispositif selon l'une quelconque des revendications 1 à 4 et comprend les étapes suivantes :

- introduction de boue dans une extrudeuse bivis corotative ;
- introduction d'un additif pulvérulent dans l'extrudeuse en aval de l'entrée de la boue ;
- mélange de la boue et de l'additif pulvérulent dans l'extrudeuse ;
- récupération du mélange de boue et d'additif pulvérulent en sortie de l'extrudeuse ;

dans lequel le débit d'alimentation en additif pulvérulent est régulé en fonction du débit d'alimentation en boue et dans lequel le temps de séjour de la boue dans l'extrudeuse est inférieur à 1 minute, en particulier inférieur à 45 secondes, plus particulièrement inférieur à 30 secondes.

6. Procédé selon la revendication 5, **caractérisé en ce que** le débit de boue traitée est supérieur à 500 kg/heure, en particulier supérieur à 750 kg/heure, plus particulièrement supérieur à 900 kg/heure.

7. Procédé selon la revendication 5 ou 6, **caractérisé en ce que** la boue est défloculée avant d'être introduite dans l'extrudeuse.

8. Procédé selon l'une quelconque des revendications 5 à 7, **caractérisé en ce que** l'additif pulvérulent est de la chaux.

9. Procédé selon la revendication 8, **caractérisé en ce que** le rapport entre la masse de chaux et la masse totale de chaux et de boue introduite dans le fourreau est inférieur à 35%, en particulier inférieur à 30%, plus particulièrement inférieur à 25%, de façon plus particulière inférieur à 20%.

10. Procédé selon l'une quelconque des revendications 5 à 7, **caractérisé en ce que** l'additif pulvérulent est de la boue sèche.

11. Procédé selon l'une quelconque des revendications 5 à 10, caractérisé en ce l'image numérisée de la boue en sortie de l'extrudeuse présente une variance du niveau de gris de la surface topographique inférieure à 20%, en particulier inférieure à 15%, plus particulièrement inférieure à 10%.

**Patentansprüche**

1. Vorrichtung (1) zur Schlammbehandlung mit einem pulverförmigen Zusatz, wobei die Vorrichtung umfasst:

- eine Ummantelung (2), welche zwei ko-rotierende Schnecken (3, 3') einschließt, wobei die Schnecken der Ummantelung zwei (4, 5) oder drei (4a, 4, 5) aufeinanderfolgende Bereiche aufweisen: wobei der erste Bereich (4) das Mischen des Schlamms und des pulverförmigen Zusatzes gewährleistet, wobei der zweite Bereich (5) den Transport der Mischung aus Schlamm und pulverförmigem Zusatz gewährleistet, wobei der stromaufwärts des ersten Bereichs (4) angeordnete dritte Bereich (4a) den Transport des Schlamms vom Zulauf des Schlamms (6) bis zum ersten Bereich (4) gewährleistet, wobei die Schneckenabschnitte (3, 3') des zweiten Bereichs (5) und des möglichen dritten Bereichs (4a) der Vorrichtung (1) Gewinde in direkter Richtung aufweisen, d.h. die Bewegungsrichtung der Gewinde entspricht der Drehrichtung der Schnecken, während die Schneckenabschnitte (3, 3') des ersten Bereichs (4) Gewinde in indirekter Richtung aufweisen, d.h. die Bewegungsrichtung der Gewinde ist der Drehrichtung der Schnecken entgegengesetzt;

- einen Schlammzulauf (6), der stromaufwärts des ersten Bereichs (4) oder des möglichen dritten Bereichs (4a) mündet;
- einen Zulauf für den pulverförmigen Zusatz (7), der auf der Höhe des ersten Bereichs (4) oder des möglichen dritten Bereichs (4a) mündet;
- einen Auslass (8) für die Mischung aus Schlamm und pulverförmigem Zusatz stromabwärts des zweiten Bereichs (5);
- ein Regulierungsmittel (9), welches es erlaubt, die Fördermenge des pulverförmigen Zusatzes abhängig von der Fördermenge des Schlamms zu regulieren;

wobei die Schnecken (3, 3') der Vorrichtung (1) jeweils ein Verhältnis Länge/Durchmesser aufweisen, das kleiner 20 ist, vorzugsweise kleiner 14 und noch stärker bevorzugt kleiner 10.

2. Vorrichtung (1) nach Anspruch 1, **dadurch gekennzeichnet, dass** der Zulauf für den pulverförmigen Zusatz (7) eine Dosiervorrichtung (10) umfasst.

3. Vorrichtung (1) nach Anspruch 2, **dadurch gekennzeichnet, dass** die Dosiervorrichtung (10) eine Dosiervorrichtung mit ko-rotierenden Doppelschnecken (11, 11') ist.

4. Vorrichtung (1) nach Anspruch 3, **dadurch gekennzeichnet, dass** die Enden (12, 12') der ko-rotierenden Doppelschnecken (11, 11') der Dosiervorrichtung (10) in weniger als 0,5 cm Abstand, bevorzugt weniger als 0,4 cm Abstand, stärker bevorzugt weniger als 0,3 cm Abstand zu den ko-rotierenden Doppelschnecken (3, 3') der Vorrichtung (1) angeordnet sind.

5. Verfahren zur Behandlung von Schlamm durch Extrusion, **dadurch gekennzeichnet, dass** es in der Vorrichtung nach einem der Ansprüche 1 bis 4 durchgeführt wird und die folgenden Schritte umfasst:

- Einführen von Schlamm in einen ko-rotierenden Doppelschneckenextruder;
- Einführen eines pulverförmigen Zusatzes in den Extruder stromabwärts des Schlammzulaufs;
- Mischen des Schlamms und des pulverförmigen Zusatzes in dem Extruder;
- Auffangen der Mischung aus Schlamm und pulverförmigem Zusatz am Extruder-Ausgang;

wobei die Zuführmenge des pulverförmigen Zusatzes abhängig von der Zuführmenge des Schlamms reguliert wird und wobei die Aufenthaltszeit des Schlamms in dem Extruder kleiner 1 Minute ist, insbesondere kleiner 45 Sekunden, noch spezifischer kleiner 30 Sekunden.

6. Verfahren nach Anspruch 5, **dadurch gekennzeichnet, dass** der Durchsatz behandelten Schlamms größer 500 kg/Stunde ist, insbesondere größer 750 kg/Stunde, noch spezifischer größer 900 kg/Stunde.

7. Verfahren nach Anspruch 5 oder 6, **dadurch gekennzeichnet, dass** der Schlamm vor der Einführung in den Extruder entflockt wird.

8. Verfahren nach einem der Ansprüche 5 bis 7, **dadurch gekennzeichnet, dass** der pulverförmige Zusatz Kalk ist.

9. Verfahren nach Anspruch 8, **dadurch gekennzeichnet, dass** das Verhältnis zwischen dem Gewicht des Kalks und dem Gesamtgewicht von in die Ummantelung eingeführtem Kalk plus Schlamm kleiner 35 % ist, insbesondere kleiner 30 %, noch spezifischer kleiner 25 %, in besonderem Maße kleiner 20 %.

10. Verfahren nach einem der Ansprüche 5 bis 7, **dadurch gekennzeichnet, dass** der pulverförmige Zusatz Trockenschlamm ist.

11. Verfahren nach einem der Ansprüche 5 bis 10, **dadurch gekennzeichnet, dass** das digitalisierte Bild des Schlamms am Ausgang des Extruders eine Varianz der Graustufe der topographischen Oberfläche kleiner 20 % aufweist, insbesondere kleiner 15 %, noch spezifischer kleiner 10 %.

**Claims**

1. Device (1) for the treatment of sludge with a powder additive, said device comprising:

- a sleeve (2) enclosing two co-rotating screws (3, 3'), said screws of said sleeve consisting of two (4, 5) or three (4a, 4, 5) successive zones: the first zone (4) ensuring the mixture of the sludge and powder additive; the second zone (5) ensuring the conveyance of the mixture of sludge and powder additive; the third zone (4a) located upstream of the first zone (4), ensuring the conveyance of the sludge from the sludge feed inlet (6) to the first zone (4); wherein the segments of screws (3, 3') of the second zone (5) and third zone (4a), if any, of the device (1) have threads in the direct direction, i.e. the direction of travel of the threads is the same as the direction of rotation of the screws, whereas the segments of screws (3, 3') of the first zone (4) have threads in the indirect direction, i.e. the direction of travel of the threads is opposite the direction of rotation of the screws;
- a sludge feed inlet (6) emerging upstream of the first zone (4) or third zone (4a), if any;
- a powder additive feed inlet (7) emerging at the first zone (4) or third zone (4a), if any;
- an outlet (8) for the mixture of sludge and powder additive downstream of the second zone (5);
- a control means (9) allowing the powder additive feed flow to be adjusted according to the sludge feed flow;

the screws (3, 3') of said device (1) each having a length/diameter ratio of less than 20, preferably less than 14, more preferably less than 10.

2. Device (1) according to claim 1, **characterized in that** the powder additive feed inlet (7) comprises a volumetric metering device (10).

3. Device (1) according to claim 2, **characterized in that** the volumetric metering device (10) is a volumetric metering device with co-rotating twin screws (11, 11').

4. Device (1) according to claim 3, **characterized in that** the ends (12, 12') of the co-rotating twin screws (11, 11') of the volumetric metering device (10) are located at least 0.5 cm, preferably at least 0.4 cm, more preferably at least 0.3 cm away from the co-rotating twin screws (3, 3') of the device (1).

5. Method for the treatment of sludge by extrusion **characterized in that** it is performed in the device according to any of claims 1 to 4 and it comprises the following steps:

- introduction of sludge into a co-rotating twin-screw extruder;
- introduction of a powder additive in the extruder downstream of the sludge inlet;
- mixing the sludge and powder additive in the extruder;
- recovery of the sludge and powder additive mixture at the outlet of the extruder;

in which the powder additive feed flow is adjusted according to the sludge feed flow and in which the dwell time of the sludge in the extruder is less than 1 minute, in particular less than 45 seconds, more particularly less than 30 seconds.

6. Method according to claim 5, **characterized in that** the flow of sludge treated is greater than 500 kg/hour, in particular greater than 750 kg/h, more particularly greater than 900 kg/hour.

7. Method according to claim 5 or 6, **characterized in that** the sludge is deflocculated before being introduced into the extruder.

8. Method according to any of claims 5 to 7, **characterized in that** the powder additive is lime.

9. Method according to claim 8, **characterized in that** the ratio between the mass of lime and the total mass of lime and sludge introduced into the sleeve is less than 35%, in particular less than 30%, more particularly less than 25%, and even more particularly less than 20%.

10. Method according to any of claims 5 to 7, **characterized in that** the powder additive is dry sludge.

11. Method according to any of claims 5 to 10, **characterized in that** the scanned image of the sludge exiting the extruder has a variance of the grey level of the topographic surface of less than 20%, in particular less than 15%, more particularly less than 10%.

Figure 1

Figure 2

Figure 3

Figure 4

**EP 3 233 739 B1**

**RÉFÉRENCES CITÉES DANS LA DESCRIPTION**

**Documents brevets cités dans la description**

- FR 2940800